# EUROPEAN PATENT APPLICATION

(11) **EP 2 165 800 A1**
(43) Date of publication of application: **24.03.2010**
(21) Application number: 09011855.5
(22) Date of filing: 17.09.2009
(51) Int. Cl.: B23Q 5/52, B23Q 17/09, B23Q 17/22

(54) **Method of drilling a workpiece**

(30) Priority: 23.09.2008 US 284566
(71) Applicant: PEDDINGHAUS CORPORATION, Bradley, Illinois 60915 (US)
(72) Inventor: Kempen, Kirk, Bradley Illinois 60915 (US); Mullikin, Michael, Bradley Illinois 60915 (US)
(74) Representative: Szynka, Dirk

(57) **Abstract**

A method of operating a drill, or like cutting tool, facilitates efficient operation when drilling structural steel components, or like workpieces, which typically exhibit dimensional variations. Instead of controlling drill operations by the specific degree of advancement of the drill, the present invention contemplates that the drill is initially operated, while disengaged from the workpiece, to establish a no-load value of operation. Thereafter, the drill is advanced into the workpiece while it is operating to engage and penetrate the workpiece, while the load on the electric motor operating the drill is monitored. Advancement of the drill is discontinued, and the drill withdrawn, when the load on the drill drops to a value which is no more than the no-load value, plus a predetermined percentage thereof. Efficient operation is desirably promoted, since the drill can be efficiently repositioned when hole formation is complete.

## Description

### Technical Field

The present invention relates generally to a method of operating a cutting tool, for example a drill for drilling a workpiece, and more particularly to a method of operating a cutting tool for cutting a workpiece, such as a structural steel component or the like, which facilitates for example efficient drilling of multiple holes in a workpiece, by monitoring the load, for example the electrical current load on the electric motor operating the cutting tool prior to engagement with the workpiece to establish a no-load value, and discontinuing advancement of the cutting tool after the load on the cutting tool drops to a value no more than then no-load value, plus a predetermined percentage thereof.

### Background Of The Invention And Technical Problems Posed By the Prior Art

Fabrication of structural workpieces, such as, for example, structural steel 1-beams, wide flange beams, angles, channels, flat plates, etc., typically requires cutting, drilling, punching, and severing portions of the workpiece. Automated drilling and cutting machines are typically employed for performing these processing operations. For example, a suitable machine tool can be used to drill multiple holes in a workpiece, as may be required in a structural steel beam or the like for receiving associated fasteners.

In a typical drilling machine of this nature, a workpiece, such as a structural steel beam, is supported lengthwise upon, and clamped to, a table adjacent to a drill carriage. The carriage supports a drill spindle so that a drill mounted thereon can be moved to desired locations along the length of the beam, along the height of the beam, and toward and away from the beam. The drilling machine is thus operated for drilling the multiplicity of holes that are typically required in each structural steel component for receiving associated fasteners.

Experience has shown that precise and efficient drilling or other cutting of such structural steel components is complicated by the typical dimensional tolerances which such components exhibit, which may be on the order of plus or minus 0.25 inches. In view of these typical tolerances, cutting machines of this nature are typically programmed to ensure completion of the desired cutting operation, ordinarily by having the drill or other cutting tool be advanced in a fashion which ensures complete cutting of the workpiece, irrespective of the specific dimensional variations thereof.

Unfortunately, as a consequence of this typical operational technique, operating inefficiencies are inevitable. Because cutting tools of this nature must be advanced at the appropriate slow feed rate for effecting drilling or cutting, the drill or other cutting tool must be programmed to advance at this relatively reduced rate of speed, even though for some workpieces, drilling or cutting may have already been completed. In other words, it is common practice to intentionally feed the tool some additional distance beyond what is theoretically necessary, to be sure that the hole or other cutting operation is completely effected through the workpiece. Because of this requirement, there is inevitably some wasted travel when the tool is simply "spinning in air", such as after the drill exits th e material at the bottom of the hole being formed. Even though for each individual hole or other cutting operation this may be a relatively short period of time, attendant to drilling of hundreds, or even thousands of holes, during a typical eight-hour shift, this can result in substantial periods of time during which the drill or other cutting tool is simply "spinning in air" rather than cutting, or being positioned for the next cutting operation.

The present invention contemplates a method of operating a drill, or other cutting tool, which minimizes the time period during each cutting operation during which the cutting tool is not cutting the associated workpiece, or being positioned for the next cutting operation.

### Summary Of The Invention

In accordance with the present invention, a method of operating a cutting tool for cutting a workpiece contemplates that the load on that tool, for example the electrical current load on the electric motor operating the tool, is monitored prior to engagement of the tool with the workpiece, to thereby establish an initial no-load value. Attendant to cutting of the workpiece, the load, for example the electrical current load on the tool, for example a drill, is monitored, with the present invention contemplating that advancement of the cutting tool is discontinued when the load thereon drops to a value which is no more than a no-load value, plus a predetermined percentage thereof.

While the present invention is disclosed herein in connection with a method of operating a drill for drilling a workpiece, it will be understood that the present invention can be similarly employed for operation of other cutting tools for cutting a workpiece. Thus, the disclosure relating to a drill and a drilling operation is relating to other cutting tools and other cutting operations analogously without further explicit mentioning.

In accordance with the present invention, the present method contemplates initially operating the drill while it is disengaged from the workpiece, and monitoring the electrical load on the drill to establish a no-load value. Thereafter, the drill is advanced while it is operating so that it engages and penetrates the workpiece. In the preferred practice of the invention, the drill is advanced at a first, relatively high rate of speed until the distance between the workpiece and the drill has decreased to a predetermined distance. Thereafter, the drill is further advanced at a relatively reduced speed so that the drill engages and penetrates the workpiece. Efficient operation is thus promoted.

As the drill is advanced, preferably, the electrical current load on the motor operating the drill is monitored as the drill advances through the workpiece. In the preferred form, advancement of the drill is also monitored. Because it is recognized that some finite period of time is required for the drill to completely advance through the workpiece, monitoring of the electrical load thereon is preferably initiated after a predetermined degree of advancement of the drill with respect to the workpiece. In accordance with currently preferred practice of the present invention, monitoring of the electrical load on the electric motor operating the drill is initiated after the drill has been moved between 50-75% of its total distance of advancement.

By monitoring the load, preferably the electrical current load on the drill as it advances through the workpiece, the present invention contemplates that it can be precisely determined when the drill has completed drilling of the workpiece, irrespective of specific dimensional variations in the workpiece itself. To this end, advancement of the drill is discontinued when the electrical current load on the drill drops to a value which is no more than the no-load value, plus a predetermined percentage of the no-load value. The reason a value is selected which is greater than the no-load value is because inevitably friction between the drill and the workpiece causes the load on the drill, after the hole has been formed, to be somewhat higher than the initial no-load value determined when the drill was initially disengaged from the workpiece. In current practice of the invention, this predetermined percentage is about 10%.

After the completion of the cutting operation, the drill can be withdrawn, and repositioned with respect to the workpiece for any further drilling or cutting to be performed.

Other features and advantages of the present invention will become readily apparent from the following detailed description, the accompanying drawings, and the appended claims.

### Brief Description Of The Drawings

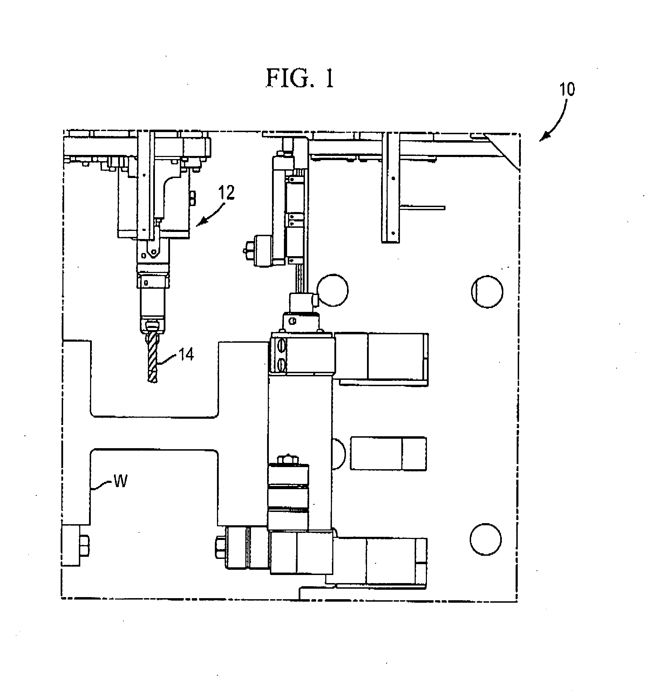

FIGURES 1, 2, 3, 4 and 5 are diagrammatic views illustrating a method of operating a drill in accordance with the principles of the present invention.

### Detailed Description

While the present invention is susceptible of embodiment in various forms, there is shown in the drawings, and will hereinafter be described, a presently preferred embodiment of the invention, with the understanding that the present disclosure is to be considered as an exemplification of the invention, and is not intended to limit the invention to the specific embodiment illustrated.

In accordance with the present invention, a method of operating a drill for drilling a workpiece is disclosed which facilitates the efficient drilling of multiple holes in structural steel components or the like, as is typically required to configure the steel components for receiving associated mechanical fasteners. The present invention desirably promotes efficiency in connection with such a drilling operation, with it being appreciated that a multiplicity of holes will typically need to be drilled in any specific structural steel component, with it further being appreciated that such structural steel components typically exhibit dimensional tolerances which may be on the order of plus or minus 0.25 inches. While the present invention is disclosed herein in connection with a method of drilling a workpiece, it will be appreciated that principles of the present invention are equally applicable for operation of other cutting tools for cutting workpieces such as structural steel.

As illustrated in FIGURE 1, a drilling apparatus 10 typically includes a drill spindle 12 driven by an associated motor, the current load of which is monitored, in accordance with the principles of the present invention. In one current embodiment, the drilling apparatus includes a Siemens Spindle Drive, Model No. 6SN1123-1AA00-0DA2, with a Spindle Motor Model No. 1PH7-133-2ND02-0CC0. A current load monitor can be arranged to monitor the electrical current load for the drive motor, with a suitable electronic amplifier provided to electronically control the rotational speed at which the drill spindle is driven.

For effecting formation of holes in the associated workpiece W, the drill spindle 12 and associated drill 14, can be advanced and retracted by the drilling apparatus, with the advancement and retraction speeds specifically programmed dependent upon the specific drill and workpiece, as well with regard to the dimensional characteristics of the workpiece W. Ordinarily, it is desirable to advance the drill toward the workpiece at a relatively high rate of advancement, and thereafter reduce the rate of advancement to the relatively lower drilling speed which is dependent upon the specific drill and workpiece.

In accordance with the present invention, efficient operation of the drilling apparatus 10 is facilitated by monitoring the electrical load on the electric motor operating the drill, and ascertaining a predetermined level of reduction in the load. This desirably promotes efficient operation of the drilling apparatus, since the apparatus is specifically monitored to determine when drilling of a specific hole is completed, rather than with operation being dependent upon the specific distance through which the drill is advanced. In effect, the present invention contemplates automatic detection of "breakthrough" of the drill to the workpiece, which can desirably promote efficient operation of the drilling apparatus.

The present invention contemplates that a no-load value of the electrical current load on the electric motor of the drill spindle is first established by initially operating the drill while it is disengaged from the workpiece W (FIGURE 1). When the drill is "spinning in air", and not subjected to any load, the automated controls of the drilling apparatus ascertain and record this no-load value.

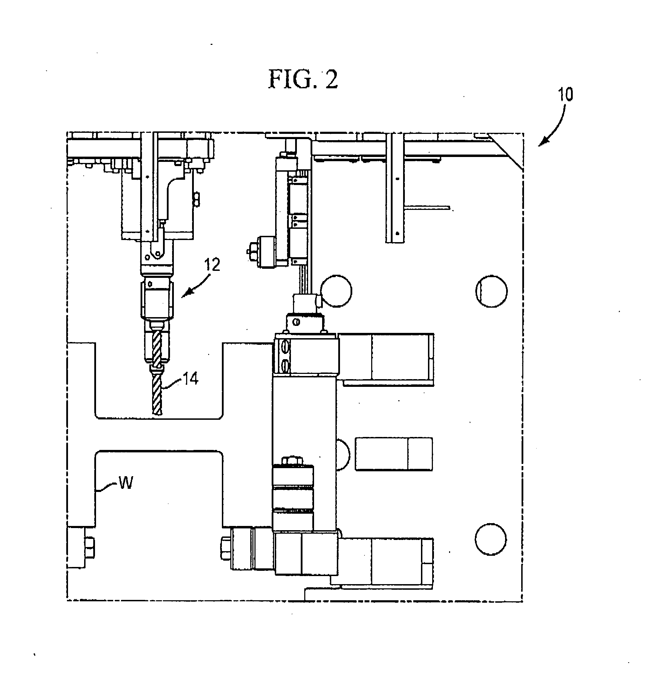

The drill is next advanced toward the workpiece while it is operating so that it engages and penetrates the workpiece. In the preferred practice of the present invention, the drill is advanced at a first rate of speed until it is positioned in closely spaced relationship to the workpiece, that is, until the distance between the workpiece and the drill has decreased to a predetermined distance (FIGURE 2), the drill is then advanced at a second, relatively reduced rate of speed selected dependent upon the specific drill and workpiece. In this way, the drill is efficiently positioned for engaging the workpiece.

The apparatus is operated to monitor advancement of the drill through the workpiece, with the present method contemplating that the electrical current load on the electric motor operating the drill is monitored as it advanced through the workpiece.
Because it is recognized that a certain degree of advancement is required before the drill will "break through" the workpiece, and complete hole formation, irrespective of workpiece dimensional variations, the present method contemplates that monitoring of the electrical current load is not initiated until after a predetermined degree of advancement of the drill through the workpiece. In current practice, monitoring of the electrical current load on the electric motor operating the drill is initiated after the drill has been advanced between about 50-75% of the total distance of advancement with respect to the workpiece.

The automated controls of the drilling apparatus monitor the electrical current load on the drill as it advances through the workpiece. This specific drilling time varies, of course, dependent upon the specific cutting tool, and the size of the hole being formed, the specific thickness and composition of the workpiece, etc. Notwithstanding, the typical dimensional variations in the workpiece, the present invention permits operation of the drill so that "breakthrough" and completion of drilling of the hole is automatically detected. The automatic detection provided by the present invention can accommodate the spike in the load on the drill which can sometimes occur when drilling of the hole is nearly completed, and the drill bit can "corkscrew", and "grab" and be drawn into the workpiece.

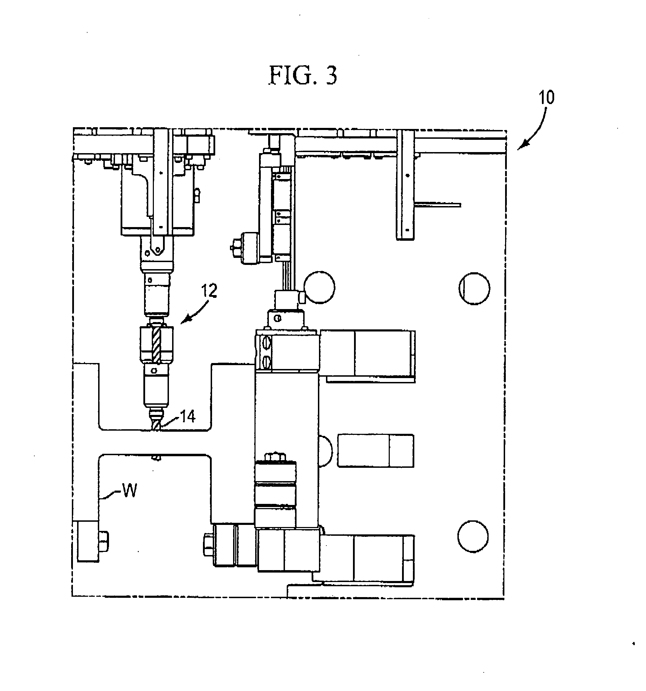

As the drill completes hole formation and is advanced through the workpiece (FIGURE 3), the electrical current load on the drive motor reduces significantly, with the present invention discontinuing advancement of the drill through the workpiece, when the load on the drill drops to a value which is no more than the initially-determined no-load value, plus a predetermined percentage of the no-load value. This predetermined percentage, which may equal about 10%, takes into account the friction which exists between the drill and the workpiece, even though hole formation is completed. Thereafter, the drill is withdrawn from the workpiece, whereupon the drill spindle can be repositioned with respect to the workpiece, for further drilling operations. Rotational operation of the drill can be discontinued, if desired, as the drill is repositioned.

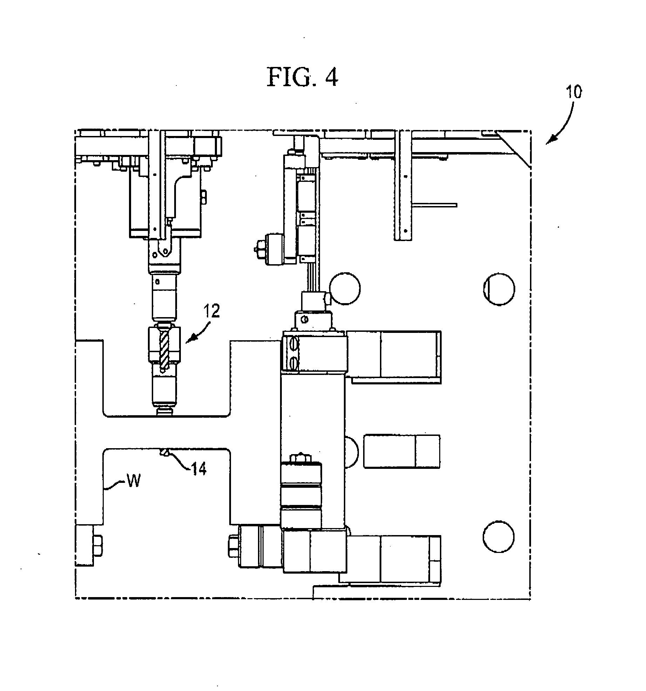

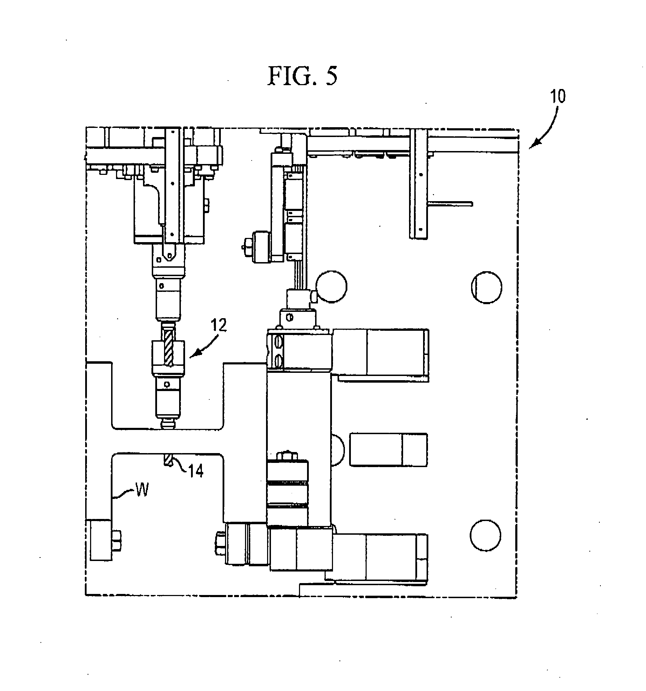

Thus, while drilling is being effected, the spindle drive motor utilization increase is monitored, and when the utilization drops to the previously recorded no-load value, plus a predetermined percentage, indicating the hole has been completed, the spindle can be immediately returned, without waiting for the additional travel that is normally required at the bottom of the hole. The present method desirably avoids the wasted motion and time typically required for accommodating dimensional variations in structural steel workpieces during drilling of multiple holes therein (FIGURES 4, 5).

While the present invention contemplates that monitoring of the electrical current load or utilization of the spindle motor drive is monitored, it is within the purview of the present invention that the present method can be practiced by monitoring or other loads on the drill, such as the load on the associated feed motor to measure the thrust needed to advance the drill. Use of one or more strain gauges for load measurement can be employed.

From the foregoing, it will be observed that numerous modifications and variations can be effected without departing from the true spirit and scope of the novel concept of the present invention. It is to be understood that no limitation with respect to the specific embodiment disclosed herein is intended or should be inferred. The disclosure is intended to cover, by the appended claims, all such modifications as fall within the scope of the claims.

## Claims

1. A method of operating a cutting tool for cutting a workpiece, comprising the steps of:
(A) initially operating said cutting tool while disengaged from said workpiece, and monitoring the load on said cutting tool to establish a no-load value;
(B) advancing said cutting tool while it is operating so that it engages and penetrates the workpiece;
(C) monitoring the load on said cutting tool as it advances through said workpiece; and
(D) discontinuing advancement of the cutting tool when the load on the cutting tool drops to a value which is no more than said no-load value, plus a predetermined percentage of said no-load value.

2. A method of operating a cutting tool for cutting a workpiece in accordance with claim 1, and further including the steps of:
withdrawing said cutting tool from the workpiece when the load on the cutting tool drops to said value at which operation is discontinued.

3. A method of operating a cutting tool for cutting a workpiece in accordance with claim 1 or 2, wherein:
said predetermined percentage equals about 10 percent.

4. A method of operating a cutting tool cutting tool for cutting a workpiece in accordance with one of claims 1 - 3, including:
monitoring advancement of said cutting tool through said workpiece.

5. A method of operating a cutting tool for cutting a workpiece in accordance with claim 4, wherein:
said step (C) of monitoring the load on said cutting tool is initiated after a predetermined degree of advancement of said cutting tool though said workpiece.

6. A method of operating a cutting tool for cutting a workpiece in accordance with claim 4 or 5, wherein:
during said step (B), said cutting tool is advanced at a first rate of speed toward said workpiece while not yet engaged with the workpiece until the distance between the workpiece and the cutting tool has decreased to a predetermined distance, and is then advanced at a second, relatively reduced rate of speed selected dependent upon the specific cutting tool and workpiece.

7. A method of operating a cutting tool for cutting a workpiece in accordance with one of claims 1 - 6, wherein:
the step (C) of monitoring the load on said cutting tool comprises monitoring the electrical current load of an electric motor operating said cutting tool.

8. A method of operating a cutting tool for cutting a workpiece in accordance with claim 7, wherein said cutting tool is a drill for drilling a workpiece, and wherein:
step (A) includes initially operating said drill while disengaged from said workpiece, and monitoring the electrical current load on an electric motor operating said drill to establish a no-load value;
step (B) includes advancing said drill while it is operating to a position in closely spaced relationship to said workpiece at a first, relatively high rate of speed, and thereafter further advancing said drill at a relatively reduced rate of speed so that the drill engages and penetrates the workpiece;
step (C) includes monitoring the electrical current load on an electric motor operating said drill as it advances through said workpiece;
step (D) includes discontinuing advancement of the drill when the electrical current load on the electric motor operating the drill drops to a value which is no more than said no-load value, plus a predetermined percentage of said no-load value; and
the method further includes, after step (D), the additional step of withdrawing said drill from the workpiece when the electrical current load on the electric motor operating the drill drops to said value at which operation is discontinued.

9. A method of operating a cutting tool for cutting a workpiece in accordance with claim 8, wherein:
said predetermined percentage equals about 10 percent.

10. A method of operating a cutting tool for cutting a workpiece in accordance with claim 8 or 9, including
monitoring advancement of said drill through said workpiece, wherein said step of monitoring the electrical current load on the electric motor operating said drill is initiated after a predetermined degree of advancement of said drill with respect to said workpiece.

11. A method of operating a cutting tool for cutting a workpiece in accordance with claim 10, wherein:
said step of monitoring the electrical current load on the electric motor operating said drill is initiated after the drill has been advanced between about 50-75% of its total distance of advancement.

12. A method of operating a cutting tool for cutting a workpiece, in accordance with one of claims 1 - 11 wherein:
step (A) includes monitoring the electrical current load on an electric motor operating said cutting tool to establish a no-load value;
step (C) includes monitoring the electrical current load on said cutting tool as it advances through said workpiece; and
step (D) includes discontinuing advancement of the cutting tool when the electrical current load on the cutting tool drops to a value which is no more than said no-load value, plus a predetermined percentage of said no-load value; and
the method further includes, after step (D), the step of withdrawing said cutting tool from the workpiece when the electrical current load on the electric motor operating the cutting tool drops to said value at which operation is discontinued.

13. A method of operating a cutting tool for cutting a workpiece in accordance with claim 12, wherein:
said predetermined percentage equals about 10 per cent.

14. A method of operating a cutting tool for cutting a workpiece in accordance with claim 12 or 13, wherein step (C) is initiated after a predetermined degree of advancement of said cutting tool with respect to said workpiece.

15. A method of operating a cutting tool for cutting a workpiece in accordance with one of claims 12 - 14, including:
during said step (B), said cutting tool is advanced at a first rate of speed while not yet engaged with the workpiece until the distance between the workpiece and the cutting tool has decreased to a predetermined distance, and said cutting tool is then advanced at a second, relatively reduced rate of speed selected dependent upon the specific cutting tool and workpiece.
